# EUROPEAN PATENT APPLICATION

(11) **EP 4 197 686 A1**
(43) Date of publication of application: **21.06.2023**
(21) Application number: 21020639.7
(22) Date of filing: 15.12.2021
(51) Int. Cl.: B23K 26/12, B29C 64/371, B22F 10/20, B22F 10/31, B22F 10/32, B22F 12/90, B33Y 30/00, B33Y 40/00, B33Y 50/02

(54) **METHOD OF CONTROLLING PERFORMANCE OF AN APPARATUS**

(71) Applicant: Linde GmbH, 82049 Pullach (DE)
(72) Inventor: Bauer, Dominik, 82049 Pullach (DE); Stephan, Thomas, 82049 Pullach (DE)
(74) Representative: Gellner, Bernd

(57) **Abstract**

A method of controlling the performance of an apparatus for controlling gas environment in a manufacturing space wherein the apparatus comprises a first oxygen sensor and a second oxygen sensor, first and second oxygen sensors configured to estimate an amount of oxygen in a manufacturing space; a controller receive signals from the oxygen sensors and to control the amount of oxygen in the manufacturing space by adjusting the flow of a process gas if the signal from the sensors exceeds a predetermined threshold. A system for performing the method is further disclosed.

## Description

The present invention relates to a method of controlling the performance of an apparatus for controlling gas environment in a manufacturing space, particularly, but not exclusively, in additive manufacturing (AM) processes.

The main differences between processes for AM are in the way layers are deposited to create parts and in the materials that are used. Some methods melt or soften the material to produce the layers, for example selective laser melting (SLM) or direct metal laser sintering (DMLS), selective laser sintering (SLS), fused deposition modeling (FDM), or fused filament fabrication (FFF), while others cure liquid materials using different sophisticated technologies.

SLS is an AM technique that uses a laser as the power source to sinter powdered material, aiming the laser automatically at points in space defined by a 3D model, binding the material together to create a solid structure. It is similar to DMLS. Both are instantiations of the same concept but differ in technical details. SLM uses a comparable concept, but in SLM the material is fully melted rather than sintered, allowing different properties (crystal structure, porosity, and so on). SLS involves the use of a high power laser (for example, a carbon dioxide laser) to fuse small particles of plastic, metal, ceramic, or glass powders into a mass that has a desired three-dimensional shape. The laser selectively fuses powdered material by scanning crosssections generated from a 3-D digital description of the part (for example from a CAD file or scan data) on the surface of a powder bed. After each cross-section is scanned, the powder bed is lowered by one layer thickness, a new layer of material is applied on top, and the process is repeated until the part is completed. Because finished part density depends on peak laser power, rather than laser duration, a SLS machine typically uses a pulsed laser.

SLM is a particular rapid prototyping, 3D printing, or AM technique designed to use a high power-density laser to melt and fuse metallic powders together. In many SLM is considered to be a subcategory of SLS. The SLM process has the ability to fully melt the metal material into a solid 3D-dimensional part unlike SLS. With selective laser melting, thin layers of atomized fine metal powder are evenly distributed using a coating mechanism onto a substrate plate, usually metal, that is fastened to an indexing table that moves in the vertical (Z) axis. This takes place inside a chamber containing a tightly controlled atmosphere of inert gas, either argon or nitrogen at oxygen levels below 500 parts per million. Once each layer has been distributed, each 2D slice of the part geometry is fused by selectively melting the powder. This is accomplished with a high-power laser beam, usually an ytterbium fiber laser with hundreds of watts. The laser beam is directed in the X and Y directions with two high frequency scanning mirrors. The laser energy is intense enough to permit full melting (welding) of the particles to form solid metal. The process is repeated layer after layer until the part is complete.

Electron-beam additive manufacturing or electron-beam melting (EBM) is a type of additive manufacturing, or 3D printing, for metal parts. The raw material (metal powder or wire) is placed under a vacuum and fused together from heating by an electron beam. This technique is distinct from selective laser sintering as the raw material fuses having completely melted.

Metal powders can be consolidated into a solid mass using an electron beam as the heat source. Parts are manufactured by melting metal powder, layer by layer, with an electron beam in a high vacuum. This powder bed method produces fully dense metal parts directly from metal powder with characteristics of the target material. The EBM machine reads data from a 3D CAD model and lays down successive layers of powdered material. These layers are melted together utilizing a computer-controlled electron beam. In this way it builds up the parts. The process takes place under vacuum, which makes it suited to manufacture parts in reactive materials with a high affinity for oxygen, e.g. titanium. The process is known to operate at higher temperatures (up to 1000 °C), which can lead to differences in phase formation though solidification and solid-state phase transformation.

The powder feedstock is typically pre-alloyed, as opposed to a mixture. That aspect allows classification of EBM with SLM, where competing technologies like SLS and DMLS require thermal treatment after fabrication. Compared to SLM and DMLS, EBM has a generally superior build rate because of its higher energy density and scanning method.

Selective heat sintering (SHS) is a type of additive manufacturing process. It works by using a thermal print head to apply heat to layers of powdered thermoplastic. When a layer is finished, the powder bed moves down, and an automated roller adds a new layer of material which is sintered to form the next cross-section of the model. SHS is best for manufacturing inexpensive prototypes for concept evaluation, fit/form and functional testing. SHS is a Plastics additive manufacturing technique similar to SLS, the main difference being that SHS employs a less intense thermal print head instead of a laser, thereby making it a cheaper solution, and able to be scaled down to desktop sizes.

Direct metal laser sintering (DMLS) is an additive manufacturing metal fabrication technology, occasionally referred to as SLS or SLM, that generates metal prototypes and tools directly from computer aided design (CAD) data. It is unique from SLS or SLM because the process uses a laser to selectively fuse a fine metal powder. DMLS uses a variety of alloys, allowing prototypes to be functional hardware made out of the same material as production components. Since the components are built layer by layer, it is possible to design organic geometries, internal features and challenging passages that could not be cast or otherwise machined. DMLS produces strong, durable metal parts that work well as both functional prototypes or end-use production parts. The DMLS process begins with a 3D CAD model whereby a .stl file is created and sent to the machine's computer program. The DMLS machine uses a highpowered 200 watt Yb-fiber optic laser. Inside the build chamber area, there is a material dispensing platform and a build platform along with a recoater blade used to move new powder over the build platform. The technology fuses metal powder into a solid part by melting it locally using the focused laser beam. Parts are built up additively layer by layer, typically using layers 20 micrometers thick.

Another approach is to use an electron beam to melt welding wire (Metal wire-based systems; wire arc additive manufacturing WAAM) onto a surface to build up a part. This is similar to the common 3D printing process of fused deposition modeling, but with metal, rather than plastics. With this process, an electron-beam gun provides the energy source used for melting metallic feedstock, which is typically wire. The electron beam is a highly efficient power source that can be both precisely focused and deflected using electromagnetic coils at rates well into thousands of hertz. Typical electron-beam welding systems have high power availability, with 30- and 42-kilowatt systems being most common. A major advantage of using metallic components with electron beams is that the process is conducted within a high-vacuum environment of 1×10⁻⁴ Torr or greater, providing a contamination-free work zone that does not require the use of additional inert gases commonly used with laser and arc-based processes. With EBDM, feedstock material is fed into a molten pool created by the electron beam. Through the use of computer numeric controls (CNC), the molten pool is moved about on a substrate plate, adding material just where it is needed to produce the near net shape. This process is repeated in a layer-by-layer fashion, until the desired 3D shape is produced.

Depending on the part being manufactured, deposition rates can range up to 200 cubic inches (3,300 cm³) per hour. With a light alloy, such as titanium, this translates to a real-time deposition rate of 40 pounds (18 kg) per hour. A wide range of engineering alloys are compatible with the EBDM process and are readily available in the form of welding wire from an existing supply base. These include, but are not limited to, stainless steels, cobalt alloys, nickel alloys, copper nickel alloys, tantalum, titanium alloys, as well as many other high-value materials.

In general, AM is a manufacturing technology that includes a methodology whereby a heat source melts a feedstock of material which is deposited onto a substrate. Computer control of the movement of the heat source, and the source of the feedstock, makes it possible to build complex components. In AM the processing is not limited to the above-mentioned methods in which metal powders are processed but also includes those in which composites or polymers are also processed too. The heat source can include (but is not limited to) the already mentioned laser beam, an arc, or other plasma-based heat sources.

To conclude, AM is a process that has to be run under an inert process gas. For each process specific process gas conditions have to be met. Among those conditions is the presence of oxygen which should be less than 1000 ppm on average. In some applications, for example where oxygen sensitive metal alloys are used, the level of oxygen should be below 100 ppm. These levels of oxygen are normally measured by so-called oxygen sensors. The sensors tend to "age" with time causing drift in measurements and thus providing inaccurate readings. Therefore, these sensors need to be calibrated annually or semi-annually, for example, causing noticeable interruptions of the printing process while the sensor is being calibrated. Therefore, there is a need of more frequent, less time consuming, and automated calibration of the sensors.

It is therefore an object of the present invention to provide a method of controlling the performance of an apparatus for controlling gas environment in a manufacturing space that at least partially mitigates the problems described above.

One or more of these problems are solved by a method according to independent claim 1. Advantageous embodiments are defined in the sub-claims.

According to an aspect of the present invention there is provided a method of controlling the performance of an apparatus for controlling gas environment in a manufacturing space, wherein the apparatus comprises:
- a first oxygen sensor and a second oxygen sensor, said first and second sensors being configured to estimate an amount of oxygen in a manufacturing space;
- a controller configured to receive signals from the first oxygen sensor and the second oxygen sensor and to control the amount of oxygen in the manufacturing space by adjusting the flow of a process gas into the manufacturing space if the signal from the first or the second oxygen sensor exceeds a predetermined threshold;
   wherein the method comprises:
   - providing a calibration gas into the apparatus for controlling gas environment in the manufacturing space, wherein the calibration gas comprises a known predetermined amount of oxygen; and
   - measuring, via the first and second oxygen sensors, the amount of oxygen in the calibration gas;
   wherein the controller is further configured to determine whether or not the amount of oxygen in the calibration gas corresponds to the known predetermined amount of oxygen; and
   if the amount of oxygen measured by the first and second oxygen sensors deviates from the known predetermined amount by a set value, the controller is
   configured to output information on replacing the first and/or the second sensor, and
   if the amount of oxygen measured by the apparatus corresponds to the known predetermined amount, the controller is configured to output information on commencing an AM process.

Advantageously, it allows to control the sensors' performance as frequently as it is required and automatically performs the calibration adjustment, also for documentation purposes. More advantageously, the controller is configured to send commands either to replace/re-do the calibration, or to commence the manufacturing process.

In an embodiment, the set value is 20 ppm of oxygen. Advantageously, by setting the level of acceptable drift at only 20 ppm, it is possible to keep the sensors' measurements after the calibration as precise as possible, thus allowing use of the sensor for oxygen sensitive metal alloys.

In another embodiment, the calibration gas comprises a carrier gas and oxygen. In yet another embodiment, the carrier gas is an inert gas. In yet another embodiment, the inert gas is nitrogen, helium, argon, or a mixture thereof. Advantageously, by selecting the process gas it is possible to provide the atmosphere with the most suitable physicochemical characteristics inside the manufacturing space.

In an embodiment, the method further comprises removing the calibration gas from the apparatus and discharging the calibration gas into an atmosphere. Advantageously, purging of the calibration gas into the AM apparatus is prevented, thus avoiding introduction of residual oxygen present in the calibration gas.

In an embodiment, the AM process is any one of Selective Laser Melting (SLM), Selective Laser sintering (SLS), Direct Energy Deposition (DED), Electron Beam melting (EBM). Advantageously, the method of the present invention can be used in a wide variety of AM techniques where the sensors are present to detect the amounts of unwanted contaminants in the process atmosphere.

According to another aspect of the present invention there is provided a system for controlling the performance of an apparatus for controlling gas environment in a manufacturing space comprising:
- an apparatus for controlling a gas environment in a manufacturing space, comprising:
   - a first oxygen sensor and a second oxygen sensor, said first and second sensors being configured to estimate an amount of oxygen in a manufacturing space;
   - a controller configured to receive signals from the first oxygen sensor and the second oxygen sensor and to control the amount of oxygen in the manufacturing space by adjusting the flow of a process gas into the manufacturing space if the signal from the first or the second oxygen sensor exceeds a predetermined threshold;
- a source of a calibration gas, wherein the calibration gas comprises a known predetermined amount of oxygen;
- a controller configured to provide the calibration gas into the apparatus for controlling gas environment in a manufacturing space,
wherein the controller is further configured to determine whether or not the amount of oxygen in the calibration gas corresponds to the known predetermined amount of oxygen; and
if the amount of oxygen measured by the first and second oxygen sensors deviates from the known predetermined amount for a set value, the controller is configured to output information on replacing the first and/or the second sensor, and
if the amount of oxygen measured by the first and second oxygen sensors corresponds to the known predetermined amount, the controller is configured to output information on commencing an AM process.

In an embodiment, the first oxygen sensor is a A-probe sensor. Advantageously, the presence of the A-probe sensor allows comparison of the oxygen content of the process gas with the known oxygen content of a reference gas.

In another embodiment, the second oxygen sensor is a chemical cell. Advantageously, the presence of the second sensor allows the determination of the oxygen content when it cannot be determined by the first A-probe sensor, for example at elevated temperatures when oxygen can react with hydrogen and form water, thus reducing the amount of oxygen to be measured. In yet another embodiment, the system further comprises a pressure sensor.

In an embodiment, the controller is configured to output information in the form of an audio signal and/or a visual signal. Advantageously, it allows to notify the user of the apparatus that the sensor needs to be recalibrated and/or replaced.

The method and apparatus are shown in relation to the enclosed figures, in which:
- Figure 1: shows a schematic view of an apparatus for AM;
- Figure 2: shows a schematic view of an exemplary apparatus for controlling a gas environment in a manufacturing space during an AM process.

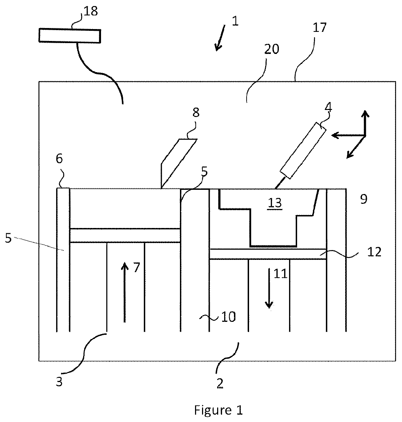

Figure 1 shows an apparatus for AM 1 according to an embodiment of the present invention.

The apparatus 1 comprises a production cylinder 2, a delivery cylinder 3 and a heat source 4.

The heat source 4 may comprise a laser beam, for example, and a corresponding scanner system for melting/sintering metal powder (not shown). However, other heat sources, such as an electron beam in combination with a scanning system, are also possible.

The delivery cylinder 3 comprises a housing 5 with a wall 6 wherein a powder delivery piston 7 is disposed inside the housing 5.

A powder applying device 8, for example a roller, is provided for pushing a metal powder from the delivery cylinder 3 to the production cylinder 2.

The production cylinder 2 comprises a housing 9 with a wall 10.

A lift table 11 with a build platform 12 is disposed inside the wall 10 of the housing 9. The lift table 11 and the corresponding build platform 12 embody a fabrication piston.

The wall 10 of the housing 9 and the build platform 12 of the lift table 11 of the production cylinder 2 define a build space 13.

The build space 13 houses the fabrication powder bed and therefore the object being fabricated.

The build platform 12 can be an integral part of the lift table 11 of the fabrication piston or a separate part connected to the lift table 11. The build platform can be pre-heated to a predetermined temperature to avoid mechanical stresses that may cause fracture of the manufactured part. For the avoidance of doubt the term manufactured part is used interchangeably with the term component throughout this description.

Furthermore, a processing chamber 17 is provided surrounding the production cylinder 2, the delivery cylinder 3 and the heat source 4.

The manufacturing space 20 according to the present invention is therefore the build space 13 of the production cylinder 2 defined by the wall 10 of the housing 9 of the production cylinder 2 and the lift table 11 with the build platform 12 disposed inside the wall 10 of the housing 9, and/or the manufacturing space is the room within the processing chamber 17.

The apparatus 1 may be used to produce parts by AM in the conventional way. The heat source 4 may be controlled to heat the platform 12 with a first layer of powder (having a thickness in the range of 120 µm) to a predetermined temperature at which the process is to take place. This temperature can be below the melting point of the powder, but is high enough to cause weak sintering of the powder (in the case of Selective Laser Sintering (SLS)). Optionally, the heat source fully melts the powder rather than sintering it (in the case of Selective Laser Melting (SLM)) For example, the predetermined temperature may be as high as 1000°C or more. The scanner system then controls the heat source 4 to further heat selected portions of the first layer of powder so as to melt these portions. A further layer of powder is then applied on top of the powder bed, and the heat source 4 is then controlled to first heat the further layer of powder to the predetermined temperature, and then to further heat selected regions so as to melt the selected regions. The process is repeated until all of the elements of the component that are required to be fused have been melted/sintered by the heat source 4. At this point, formation of the part is complete.

The sintering/melting process occurs in a gaseous atmosphere under "controlled vacuum" conditions. For example, the process may take place in an argon or helium atmosphere at a pressure that is preferably in the range of 1×10⁻³ mbar and 5×10⁻³ mbar. However, other vacuum ranges are also anticipated.

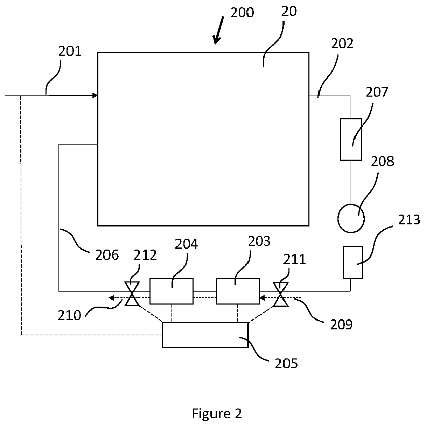

Figure 2 shows a schematic representation of an exemplary apparatus 200 controlling the performance of an apparatus for controlling gas environment in an AM process, such as that depicted in figure 1.

The process gas is supplied from a source (not shown) into the manufacturing space via a first conduit 201. Gas supply can be sourced from single cylinders with pressure regulators, manifolded cylinders, bundles with single gas regulators, and/or manifolded bundles. It is understood that the process gas is nitrogen, argon, helium, or mixtures thereof. The process gas can contain impurities that are detrimental for the final quality of the component to be built.

The impurities in the process gas can contain oxygen that will form an undesired oxide film when processing the alloy inside the manufacturing space, therefore there is a need of controlling the amount of oxygen in the atmosphere inside the build chamber 20. It is understood that the oxygen content during the manufacturing process is at least less than 1000 ppm, in order to avoid formation of the oxide layer that will affect the final mechanical and physicochemical properties of the manufactured component.

In order to estimate the oxygen content inside the manufacturing space, a sample of oxygen is taken from the manufacturing space via a second conduit 202. The sample of the process gas is then directed through a filter 207 and then pumped by a pump 208 into a first sensor 203. The first sensor can be a A-probe sensor, for example. The limitations of the A-probe sensor are the following: when the process gas is heated inside the first sensor, it can react with the residual hydrogen inside the process gas and form water. The oxygen consumed for this reaction will therefore not be measured by the first sensor, and the real concentration of oxygen in the process gas can be higher. In the other words, the real concentration of oxygen can be underestimated if only the first sensor 203 is used.

To determine the amount of oxygen inside the process gas more precisely, a second sensor 204 is used. The second sensor can be a chemical cell, for example a galvanic or amperometric sensor. The skilled person will understand that the operation principle of the second sensor 204 does not involve the side reaction of oxygen with the components of the process gas, therefore it allows for more precise measurements of the amount of oxygen inside the manufacturing space.

It is understood by the skilled person that the first sensor 203 and the second sensor 204 can be located inside or outside the manufacturing apparatus 1, as exemplified in figure 1. In the other words, they can be integrated in the apparatus 1 or be used as a standalone measuring system.

Optionally, the first and the second sensors can be located adjacent to the build platform 12 in order to measure the amount of oxygen in the vicinity of the manufacturing process.

Further optionally, a pressure sensor 213 can be installed before the first 203 and second 204 sensors. The presence of the pressure sensor helps to eliminate the influence of partial pressure on the oxygen measurement of a build job and a potential deviation between calibration modes due to different pressures of the atmospheres.

When the concentration of the oxygen in the process gas is determined, the gas sample taken previously can be returned into the manufacturing space via a third conduit 206. Optionally, it can be vented externally to the AM apparatus.

It is understood that a controller 205 controls the processes of: sampling the process gas from the manufacturing space 20; measuring the amount of oxygen by means of the first sensor 203 and the second sensor 204; and adjusting the flow of the process gas if the concentration of oxygen inside the manufacturing space exceeds the predetermined value.

In order to calibrate the first and the second sensor (203, 204), a calibration gas is introduced via a separate calibration gas conduit 209. The calibration gas can be a combination of a carrier gas and oxygen of a known concentration. The carrier gas can be an inert gas like nitrogen, argon, helium, or mixtures thereof.

The calibration gas is the passed through the sensors for the calibration to commence. As the amount of oxygen inside the calibration gas is known, it is possible to estimate whether the sensors detect the oxygen content correctly. The set value 20 ppm drift of the oxygen level reading is considered to be acceptable.

If the measured amount of oxygen during calibration exceeds the set value of 20 ppm, then the sensor needs to be either recalibrated or replaced. In this case the controller is configured to output information on replacing the first and/or the second sensor, or optionally to repeat the calibration process. It is understood that the output can be an audio- or visual signal informing the user of the AM apparatus of the next steps.

If the measured amount of oxygen during calibration does not exceed the set value of 20 ppm, the controller is configured to output information on commencing an AM process.

After the calibration has been performed, the calibration gas is then vented into the atmosphere through a calibration gas vent conduit 210.

It is understood that the controller 205 also controls the opening and closing of valves 211, 212 that allow either the process gas or the calibration gas to pass through the first and second sensors (203, 204). This function allows automatic calibration of the sensors between the printing jobs as many times as needed and eliminates the need to completely halt the printing process in order to calibrate the sensors, thus allowing early detection of the sensor faults that can, as a result, affect the quality of the manufactured parts.

It will be appreciated that embodiments of the present invention can be realised in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as claimed in any preceding claim and a machine readable storage storing such a program. Still further, embodiments of the present invention may be conveyed electronically via any medium such as a communication signal carried over a wired or wireless connection and embodiments suitably encompass the same.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed. The claims should not be construed to cover merely the foregoing embodiments, but also any embodiments which fall within the scope of the claims.

### Reference signs

- 1: apparatus
- 2: production cylinder
- 3: delivery cylinder
- 4: heat source
- 5: housing
- 6: wall
- 7: powder delivery piston
- 8: powder applying device
- 9: housing
- 10: wall
- 11: lift table
- 12: build platform
- 13: build space
- 17: processing chamber
- 20: manufacturing space
- 200: system for controlling the performance of an apparatus for controlling gas environment
- 201: first conduit
- 202: second conduit
- 203: first sensor
- 204: second sensor
- 205: controller
- 206: third conduit
- 207: filter
- 208: pump
- 209: calibration gas conduit
- 210: calibration gas vent conduit
- 211,212: valves
- 213: pressure sensor

## Claims

1. A method of controlling the performance of an apparatus for controlling gas environment in a manufacturing space (20), wherein the apparatus comprises:
- a first oxygen sensor (203) and a second oxygen sensor (204), said first and second sensors being configured to estimate an amount of oxygen in the manufacturing space (20);
- a controller (205) configured to receive signals from the first oxygen sensor (203) and the second oxygen sensor (204) and to control the amount of oxygen in the manufacturing space (20) by adjusting the flow of a process gas into the manufacturing space if the signal from the first or the second oxygen sensor exceeds a predetermined threshold; wherein the method comprises:
- providing a calibration gas into the apparatus for controlling gas environment in the manufacturing space (20), wherein the calibration gas comprises a known predetermined amount of oxygen; and
- measuring, via the first and second oxygen sensors, the amount of oxygen in the calibration gas;
wherein the controller (205) is further configured to determine whether or not the amount of oxygen in the calibration gas corresponds to the known predetermined amount of oxygen; and
if the amount of oxygen measured by the first and second oxygen sensors deviates from the known predetermined amount by a set value, the controller (205) is configured to output information on replacing the first and/or the second sensor, and
if the amount of oxygen measured by the apparatus corresponds to the known predetermined amount, the controller (205) is configured to output information on commencing an additive manufacturing process.

2. The method of clam 1 wherein the set value is 20 ppm of oxygen.

3. The method of any preceding claim, wherein the calibration gas comprises a carrier gas and oxygen.

4. The method of claim 3 wherein the carrier gas is an inert gas.

5. The method of claim 4, wherein the inert gas is nitrogen, helium, argon, or a mixture thereof.

6. The method of any preceding claim, wherein the method further comprises removing the calibration gas from the apparatus and discharging the calibration gas into an atmosphere.

7. The method of any preceding claim, wherein the AM process is any one of Selective Laser Melting (SLM), Selective Laser sintering (SLS), Direct Energy Deposition (DED), Electron Beam melting (EBM).

8. A system (200) for controlling the performance of an apparatus for controlling gas environment in a manufacturing space comprising:
- an apparatus for controlling a gas environment in a manufacturing space, comprising
- a first oxygen sensor 203) and a second oxygen sensor (204), said first and second sensors being configured to estimate an amount of oxygen in the manufacturing space (20);
- a controller configured to receive signals from the first oxygen sensor (203) and the second oxygen sensor (204) and to control the amount of oxygen in the manufacturing space (20) by adjusting the flow of a process gas into the manufacturing space if the signal from the first or the second oxygen sensor exceeds a predetermined threshold;
- a source of a calibration gas, wherein the calibration gas comprises a known predetermined amount of oxygen;
- a controller (205) configured to provide the calibration gas into the apparatus for controlling gas environment in a manufacturing space,
wherein the controller (205) is further configured to determine whether or not the amount of oxygen in the calibration gas corresponds to the known predetermined amount of oxygen; and
if the amount of oxygen measured by the first and second oxygen sensors deviates from the known predetermined amount for a set value, the controller is configured to output information on replacing the first and/or the second sensor, and
if the amount of oxygen measured by the first and second oxygen sensors corresponds to the known predetermined amount, the controller is configured to output information on commencing an additive manufacturing process.

9. The system of claim 8, wherein the first oxygen sensor (203) is a A-probe sensor.

10. The system of claim 8 or claim 9, wherein the second oxygen sensor (204) is a chemical cell.

11. The system of claim 8 further comprising a pressure sensor (213).

12. The method of claim 1 or the system of claim 8 wherein the controller (205) is configured to output information in the form of an audio signal and/or a visual signal.
